# EUROPEAN PATENT SPECIFICATION

(11) **EP 1 927 852 B1**
(45) Date of publication and mention of the grant of the patent: **30.11.2016**
(21) Application number: 06125263.1
(22) Date of filing: 01.12.2006
(51) Int. Cl.: G01N 27/414

(54) **Field effect sensing device with stabilized working point**
Feldeffektmessgerät mit stabilisiertem Arbeitspunkt
Dispositif à capteur à effet de champ, à point de fonctionnement stabilisé

(43) Date of publication of application: 04.06.2008
(73) Proprietor: Inficon GmbH, 7310 Bad Ragaz (CH)
(72) Inventor: Edvardsson, Niclas, 59054 Sturefors (SE); Eriksson, Mats, 58275 Linköping (SE)
(74) Representative: dompatent von Kreisler Selting Werner - Partnerschaft von Patent- und Rechtsanwälten mbB

(56) References cited:
- EP-A- 1 484 605
- DE-A1- 4 028 062
- LIESS M ET AL: "Properties of insulated gate field-effect transistors with a polyaniline gate electrode" THIN SOLID FILMS, ELSEVIER-SEQUOIA S.A. LAUSANNE, CH, vol. 286, no. 1, 30 September 1996 (1996-09-30), pages 252-255, XP004049448 ISSN: 0040-6090

## Description

### Technical field

The present invention relates to field effect sensing devices, such as a field effect gas sensing device, and more specifically it relates to a method for controlling such a device and to a field effect sensing device adapted for such control.

### Technical background

A field effect sensing device in general comprises a capacitive structure with an insulator arranged between a first and a second electrode. One of the electrodes and/or the surface of the insulator comprises a material or materials that are sensitive to a chemical, such as a certain gas, and which upon detection of this chemical affects an electrical field in the insulator.

One example of a field effect sensing device is a n-channel Insulated Gate Field Effect Transistor (IGFET) gas sensing device. Here the gate electrode is typically a catalytic metal deposited on top of an oxide layer. When the gate is in contact with certain gas molecules and the applied gate voltage is constant, the surface potential of the semiconductor of the IGFET is affected, which in turn results in variations in an output signal from the transistor that is indicative of the sensed gas.

However, there are a number of problems associated with this type of sensing devices. For example, a signal level indicating a certain chemical concentration may vary over time and individual sensors of the same type and construction may behave differently.

As a result, the chemical indicative signal is often not as reliable as would be desirable, and the ability to detect the chemical is impaired.

EP1484605A2 discloses one type of semiconductor sensor in the form of a monolithic integrated field effect transistor (FET) that is capacitively controlled (a so called CC-FET). The semiconductor sensor comprises a sensitive suspended gate which is separated by a distance from a counter electrode connected to a gate terminal of the FET. To prevent the semiconductor sensor and the FET from drifting away from its desired operation point, a control device connects the sensor to predefined potentials during non-measurement times.

### Summary of the invention

It is an object of the present invention to overcome or at least alleviate problems in the prior art. A specific object is to provide an alternative solution that allows for field effect sensing devices that are able to provide more reliable chemical indicative signals.

The invention is defined by the appended independent claims. Preferred embodiments are set forth in the dependent claims and in the following description and drawings.

The invention is partly based on the finding that for field effect sensing devices, and in particular for such devices where there is a difference in work function between the electrodes and where the voltage applied to the electrodes during measurement is of opposite polarity to a voltage corresponding to the work function difference, the reliability of a chemical indicative signal is dependent on how the field effect sensing device is used and thus typically on the application area for the sensing device. Since the way a sensing device is used may vary between different applications, this means that reliability problems typically are greater in certain application areas. It has e.g. been found that reliability of the chemical indicative signal is a particular problem in situations, or applications, where the field effect sensing device frequently is powered on/off, often in an unpredictable manner. Example of applications where such behavior can be found is gas sensing in automobiles and sensing in portable equipment where power saving often is required.

One manifestation of the reliability problems is that the working point of the chemical indicative signal shifts, or moves, when the device is turned on although there is no presence of the chemical that the device is sensitive to. The reliability problems have further been found to a great extent pertain to a "power on/off"-dependency in the working point of the chemical indicative signal. For example, a particularly large shift in the working point can be seen when a device that has been powered on for a longer period, is powered off and then on again. This shift is the "startup shift", or the "startup offset".

Moreover, it has been found that small, typically inevitable and unpredictable, variations between individual copies of the same type of field effect sensing device can affect and worsen reliability problems pertaining to a varying working point. For example, the startup shift in the working point can vary substantially in a random and unpredictable manner between individual sensing devices if not extreme care is taken during fabrication of the devices.

Although there is no wish to be bound by a particular theory, the found behaviour may be explained by that the voltage applied to the electrodes during measurement introduces a redistribution of charged species, in particular positively charged ions, in the insulator. The measuring voltage cause a drift and migration of these ions, farther and deeper into the insulator. When the electrode towards which the migration occur is a semiconducting material, this tends to increase the surface potential of the electrode, which in turn results in a moving working point. For example, in a gas sensitive insulated gate field effect transistor (IGFET) device, where the electrodes typically correspond to a metal gate and a p-doped semi-conducting substrate respectively, a migration of positively charged ions from the gate side towards the semiconductor side during application of a positive measuring voltage tends to increase the surface potential of the semiconductor.

Differences between individual sensing devices can e.g. be explained by a varying presence of positively charged mobile ions, and/or other charged species. The positively charged ions are believed to originate from when the devices are manufactured. When no measuring voltage is applied, such as during power off, the charged species, such as the ions, migrate back, e.g. owing to, and under influence of, the work function difference voltage of the electrodes. In addition to this, there is also an influence due to electrical forces between charged species (the mobile ions and fixed charges in the insulator), such as repulsive forces between positive ions.

It may be noted that the problems here have been observed mainly when the work function difference voltage is of polarity that is opposite to the polarity of the measuring voltage, when there is a substantial work function difference voltage, such as 0.1 eV or more, and when the measuring voltage is larger in absolute value than the work function difference voltage. However, similar problems are anticipated, although perhaps to a less extent, in any situation when there is a presence of charged species, such as positively and/or negatively charged ions, that are allowed to move into the insulator and when there is a difference in electrode net voltages between a device power-on state and a device power-off state.

Although reliability problems to some extent can be seen as application dependent, it may be noted that a generally applicable solution, i.e. one that is not dependent on how the field effect sensing device is to be used, or one that at least is applicable to a wide range of applications, is preferred over a solution that is applicable to only one, or a few, applications or ways of using the device.

Hence, according to a first aspect, the above-mentioned and other objects that will be evident from the following description, are achieved by a method according to claim 1.

According to a second aspect, the above-mentioned and other objects that will be evident from the following description, are achieved by a field effect sensing device according to claim 12.

A chemical indicative electrical output signal may for example be a voltage level. A signal that cannot indicate sensed chemicals, for example due to that a device is powered off or due to that a chemical sensor for other reasons is unable to sense the chemical, is thus not regarded a chemical indicative signal.

"Working point" here refers to the signal level of the chemical indicative signal when the chemical sensitive material is not in contact with the chemical which the material is sensitive to.

The counteracting voltage can have a value that is negative, positive or even zero.

Although there is no wish to be bound by a particular theory, it is believed that the counteracting voltage resets, or counteracts, effects on charged species, such as positively charged ions, caused by the measuring voltage, e.g. so that there is a reversal of the charge migration effects introduced by the measuring voltage. By the repetitive alterations between the measuring voltage and the counteracting voltage during power-on, the measuring voltage is prevented to introduce any substantial redistribution of the charged species in the insulator. There is a position where the charged species do not move farther under influence of the counteracting voltage, which position seems to correspond to the position reached during power-off (see examples below). The power-off position can thus be seen as the charged species being at an "initial position". It is believed that this initial position corresponds to the charged species being positioned close to one of the electrodes where they cannot move any further.

Hence, after the measuring voltage has moved the charged species into the insulator, the counteracting voltage acts so as to reset, or move, the charged species back to, or at least towards, the initial position. Since the measuring voltage according to the method is allowed to act only during the length of the measuring period before the counteracting voltage is applied, the charged species will during power-on be allowed to only move a similar, and preferably short, distance from the initial position. As a consequence also the working point drift due to charge distribution caused by the measuring voltage is counteracted by the counteracting voltage, and thus fluctuations in the working point can be kept under control, and a stabilization of the working point be achieved. Also, when the charged species during power-on in a controlled manner are regularly moved to, or at least towards, the initial position, no large charge redistributions or differences in the working point are allowed to build up and there is an alleviation of the power on/off dependency and of the start-up offset in the chemical indicative signal.

Hence the chemical indicative signal will be more reliable.

The electrodes may have a difference in work function corresponding to a "work function difference voltage". This work function difference voltage is the potential difference between the two electrodes when these are connected. Note that the value of the work function difference (ΔW) expressed in electron volts (eV) is the same as the value of the work function difference voltage (φ) expressed in volt (V). To be regarded a work function difference voltage, the size of the difference should be at least 0.1 V, and in a typical situation the difference is about 0.5 V. The work function difference voltage may be of a second polarity that is opposite to the polarity of the measuring voltage, the measuring voltage may be larger in absolute value than said work function difference voltage and the counteracting voltage may be less than an absolute value of said work function difference voltage.

The counteracting voltage may be a voltage of the second polarity, i.e. be an additional voltage that operates in the direction of the work function difference voltage. This way the position at which the ions remain during power off can be reached faster and the counteracting period may thus e.g. be made shorter. According to the above theory this may be explained by that the ions are getting an additional push back to the initial position.

The counteracting voltage may be 0 V. This mimics the situation during power-off, i.e. when there is no voltage applied to the electrodes. Here the work function difference voltage, if any, is allowed to act "freely" during the counteracting period. Charged mobile species, such as positively charged mobile ions, are here, although the device is powered on, hence allowed to, in a controlled manner, return to the position they remain at during power-off. Since no additional voltage needs to be applied in the 0 V case, this also allows for simple implementation of the method.

The step of providing the counteracting voltage may comprise connecting the first electrode to the electric potential of the second electrode. The counteracting period may be 0.8 times the measuring period or more.

It should be noted that when the charged species do not move back farther than to the initial position, such as at one of the electrodes, a large counteracting voltage of the second polarity and/or longer counteracting period may be used in order to ensure that the initial position will be reached every counteracting period independent on e.g. variations between individual sensors and/or to speed up the migration back to the initial position. A large counteracting voltage may also be used to overcome the repulsive forces between the mobile ions themselves.

The measuring period together with the counteracting period can be in the range 1 µs to 1 h, but is typically in the range 0.001 s to 1 s.

The method may further comprise the step of sampling the chemical indicative output signal during the measuring sub-interval.

The chemical sensitive material may be sensitive to a gas, such as hydrogen. A constant current may be provided between source and drain of the IGFET during the power-on period.

### Brief description of the drawings

These and other aspects of the present invention will now be described in more detail, with reference to the appended drawings.
Fig. 1a schematically shows a capacitive structure of a field effect chemical sensor in general.
Fig. 1b schematically shows a structure of a field effect chemical sensor in form of a insulated gate field effect transistor (IGFET).
Fig. 2 shows circuitry of a field effect sensing device comprising the field effect sensor of Fig. 1b.
Fig. 3 is a schematic example of a chemical indicative output signal when the field effect sensing device of Fig. 2 is controlled according to a basic method.
Fig. 4 is a flow chart illustrating a method according to an embodiment of the invention.
Fig. 5 schematically illustrates an exemplifying sub-period of a power-on period of a field effect sensing device operated according to the invention.
Fig. 6 is a schematic example of a chemical indicative output signal from a field effect sensing device that is operated according to an embodiment of the invention.
Fig. 7 is circuitry of a field effect sensing device according to an embodiment of the invention.
Fig. 8a-8c show results from test measurements on three individual field effect sensing devices that are controlled according to the basic method.
Fig. 9a-9c show corresponding test measurements as in Fig. 8a-8c using the same individual field effects sensing devices, but when these are operated according to an embodiment of the invention.

### Detailed description of embodiments

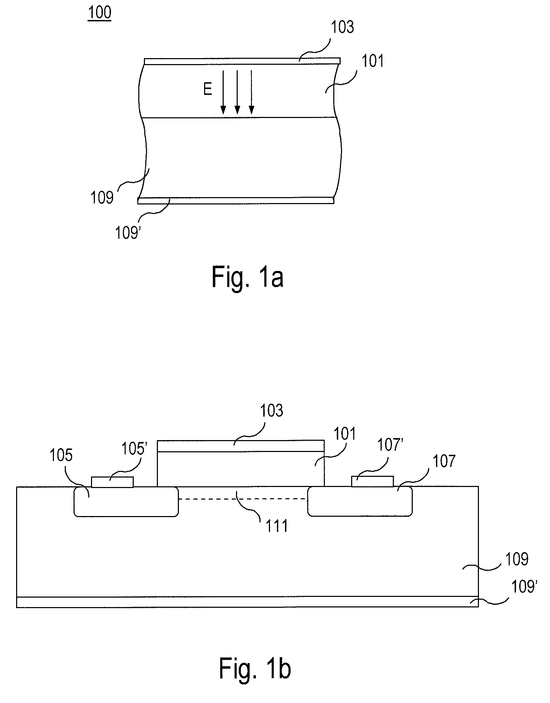

Fig. 1a schematically shows a capacitive structure 100 of a field effect (FE) sensor in general. There is an insulator 101 located between a first electrode 103 and a second electrode 109, 109'. Any one of the electrodes and the insulator, or any combination thereof, may comprise a chemical sensitive material which upon detection of the chemical affects an electrical field E in the insulator if the applied gate voltage is constant. However, typically it is only one of the electrodes that comprise, or consist, of the chemical sensitive material. A selective chemical response can be determined by appropriate choice of type and structure of the chemical sensitive material and operational temperature for the sensor. For stable sensing, the FE sensor is typically temperature regulated, using e.g a temperature sensor and a heater. The sensor is typically adapted to sense the chemical in gas form, but the sensor may also be adapted to sense the chemical in liquid form. In the latter case the first electrode 103 is separated from the insulator 101 allowing the liquid phase to be present in the volume between them.

Examples of chemical sensitive materials for gas sensing are the combination of a catalytic metal and the surface of an oxide (e.g. Pd on SiO₂). Another example is a gold electrode on top of an ion conducting material (e.g. Au on NaNO2) on top of an insulator. When a catalytic metal is used typically one of the electrodes is made of the catalytic metal.

There may be a work function difference between the electrodes, i.e. one of the electrodes has a higher work function than the other. The work function difference corresponds to a work function difference voltage φ, which is the potential difference between the two electrodes when these are connected.

The response to the chemical, i.e. the affected electrical field, can be used to generate various types of chemical indicative signals.

Fig. 1b schematically shows a structure of a field effect sensor in form of an IGFET. The parts of the capacitive structure 100 of Fig. 1a may be recognized also in Fig. 1b. The gate, here corresponding to the first electrode 103, typically comprises the chemical sensitive material. Typically the gate consists of a catalytic metal. The insulator 103 can be an oxide, such as SiO₂. The second electrode comprises a substrate 109 and a substrate contact 109'. The IGFET FE sensor is typically produced as an integrated circuit in a silicon (Si) based process and in such case the second electrode 109 typically comprises doped Si.

It should be understood that the integrated IGFET FE sensor, or any FE sensor, can be produced also in alternative materials and processes, for example, the sensor may be based on silicon carbide (SiC) instead of silicon.

In the IGFET FE sensor, a surface potential of the semiconductor controls the minority carrier concentration and thus the resistance of a conducting channel 111 between source 105, 105'and drain 107, 107'. A concentration of the chemical in the ambient of the sensor, affects the the surface potential of the semiconductor if the applied voltage is constant, which in turn affects the resistance of the conducting channel.

In an exemplifying implementation for hydrogen sensing, the first electrode (the gate 103) is of platinum, the IGFET is of n-channel type, the second electrode (the substrate 109) is of p-doped silicon, and there is a work function difference voltage φ of 0.6 V, where the gate is having the lower potential.

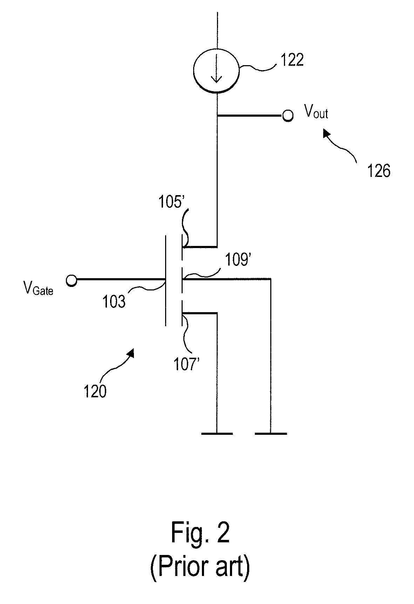

Fig. 2 shows part of a basic circuitry comprising an n-channel IGFET FE sensor, such as the sensor described in connection with Fig. 1 b. The body and source of the transistor are, via a respective body contact 109' and a source contact 107', connected to ground. Typically the gate and the drain are connected so that V_{Gate} = Vₒᵤₜ in Fig. 2. In the shown basic circuitry, a current source is connected to the drain contact 105' of the transistor so as to provide a constant current through the transistor. This is typically the situation in a FE sensing device adapted for "constant-current" sensing. A response to the chemical manifests as a change in a voltage Vₒᵤₜ provided at a node 126 at the drain of the transistor. A FE sensing device may also be adapted for "constant-voltage" sensing and then it is instead typically a voltage source connected to the drain for provision of a constant voltage over the transistor. A response is then manifested as a change of the drain-source current, I_{DS}, for this constant voltage.

Although not shown in Fig. 2, it should be noted that the sensor in practice typically will be provided also with a temperature sensor and heater, which during power-on of the device comprising the sensor maintains the sensor at an operational temperature. The operational temperature for Si-based sensors is typically in the range 100-200°C, and for SiC-based sensors in the range 200-600°C. The temperature regulation can be accomplished in one of many conventional ways.

The previously described exemplifying implementation of an IGFET FE sensor in a circuitry according to Fig.2, which is a "constant current set-up", will in the following be referred to as the "exemplifying FE sensing device" or simply the "exemplifying device".

A basic method for controlling a sensing device will now be described with reference to the exemplifying FE sensing device. During power-on of the device, a bias DC voltage of opposite polarity to, and in absolute value, exceeding, the work function difference voltage, is applied to the electrodes. This gate voltage should exceed the threshold voltage of the transistor, which is typically of the order 1-3 V and is thus larger than the work function difference voltage, 0.6 V, of the exemplifying device. The DC voltage results in an electrical field directed towards the substrate. As a result the conducting channel is affected and enabled to conduct current, which is manifested as a certain resistance between source and drain. The current source 122 provides and maintains a constant current between source 105' and drain 107', and the result is a voltage Vₒᵤₜ at node 126, which voltage is at a working point level when there is no concentration of the chemical that the device is sensitive to, i.e. hydrogen for the exemplifying device, in an ambient atmosphere of the sensor. However, when hydrogen is present in the ambient atmosphere, a hydrogen induced dipole layer is formed at the metal-insulator interface which adds a potential drop to the applied voltage. This shifts the threshold voltage of the transistor and would increase the drain-source current if the applied voltage, Vₒᵤₜ, was held constant. The constant current source responds to this by lowering the common potential, Vₒᵤₜ, at the gate and the drain so that a constant current will still flow. The shift, ΔVₒᵤₜ, is indicative of the sensed amount of hydrogen and Vₒᵤₜ is thus an example of a chemical indicative signal. Presence of hydrogen can, for example, be determined by regularly comparing Vₒᵤₜ to a reference level. Such a comparison is typically made in a digital domain and in such cases Vₒᵤₜ is sampled.

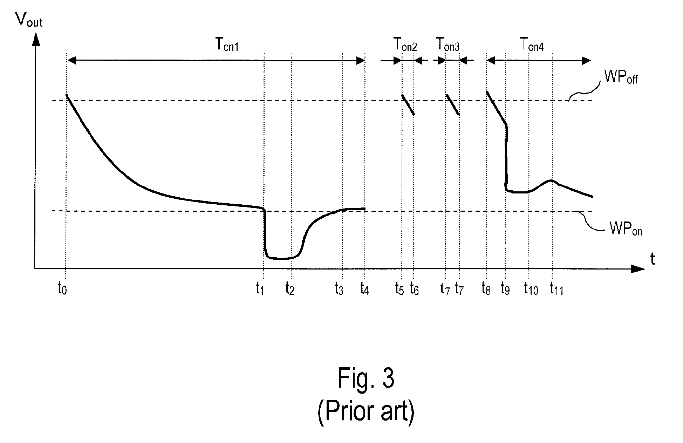

Fig. 3 is a schematic example of how the chemical indicative output signal Vₒᵤₜ may look like when the exemplifying device is controlled according to the basic method described in the foregoing. With reference to Fig. 3, a sequence of events will be described in order to enhance the understanding of problems related to a moving working point, in particular for applications that are frequently powered on/off, and to provide a reference for later comparison.

The exemplifying device is powered on at t₀ and remains so during the whole power-on period Tₒₙ₁, i.e. until t₄. At the beginning of Tₒₙ₁, i.e. close after the device has been powered on, Vₒᵤₜ is at a working point WP_{off}. During Tₒₙ₁ a downward shift of Vₒᵤₜ can be seen although the sensor is not in contact with any hydrogen molecules and even though the drain-source current is constant. However, the decrease rate of Vₒᵤₜ slows down and Vₒᵤₜ is at a working point WPₒₙ at t₁. At t₁ there is suddenly a presence of hydrogen in the ambient atmosphere and Vₒᵤₜ therefore drops below WPₒₙ. At t₂ there is no longer any significant concentration of hydrogen in the ambient atmosphere, and the sensor recovers, resulting in that WPₒₙ is reached again at t₃. Vₒᵤₜ then remains at approximately WPₒₙ until t₄ where the device is powered off. It may be noted that there is no chemical indicative signal at node 126 during power off, i.e. no Vₒᵤₜ is measured from t₄ until t₅. However, at t₅ the device is suddenly powered on again for a period Tₒₙ₂, Vₒᵤₜ is now again at the working point WP_{off}. The shift from WPₒₙ at t₄, i.e. after a longer period of power on, to WP_{off} at t₅, i.e. when the device is again powered on, is called a startup offset and can be seen as an indicator of that there are problems related to a moving working point when the device is controlled by the basic method.

At t₆, before there has been any substantial drop in Vₒᵤₜ, the device is again powered off. There is an off period between t₆ and t₇ and then there is a new, relatively short, power-on period Tₒₙ₃ followed by another power-off period between t₇ and t₈. A t₈, a longer power-on period Tₒₙ₄ begins and Vₒᵤₜ once again begins to shift and move from WP_{off} towards WPₒₙ. However, now there is a detection of hydrogen at t₉, i.e. close after the device was switched on. At this point Vₒᵤₜ is close to WP_{off} instead of WPₒₙ as in the previous case. The detection manifests as a sudden drop of Vₒᵤₜ, but Vₒᵤₜ is still above WPₒₙ. The sensor recovers from sensed chemical molecules between t₁₀ and t₁₁, and Vₒᵤₜ is again approaching WPₒₙ and passes on the way the level which, previously at t₁₀, was representing sensed gas.

It may be noted that spikes, which typically is expected in the curve in connection with power on/off, have been omitted in Fig. 3 for reasons of convenient presentation. Such spikes represent expected offsets in the signal before a correct temperature is reached and has no particular relevance in this context.

From the example of Fig. 3 it can be concluded that the basic method may not be suitable to use in applications where the FE sensing device often is powered on/off, due to the moving, or drifting, working point.

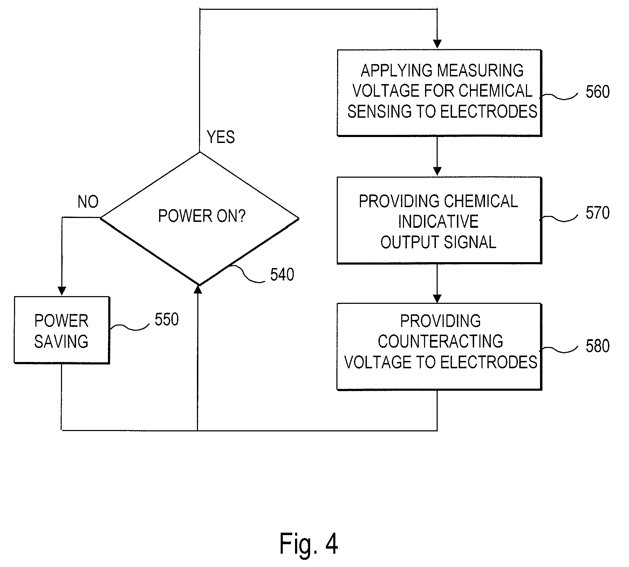

Fig. 4 is a flow chart illustrating a method according to an embodiment of the invention. The method concerns a way of controlling a field effect sensing device so as to alleviate a moving, or drifting, working point, such as described above. Although the method here will be described with some specific reference to the exemplifying sensing device, i.e. an n-channel IGFET based FE sensing device, the skilled man will recognize that the method may be used to operate also other types of FE sensing devices comprising the FE sensor capacitive structure of Fig. 1a, such as a sensing device in the form of a capacitor or a Schottky diode.

In a step 560, a measuring voltage for chemical sensing is applied to the electrodes during a measuring period T_{M}. The measuring voltage may correspond to the bias DC voltage applied in the basic method. For the exemplifying sensing device this step typically involves setting the gate 103 to a potential in the range 1-3 V. Similar as in the basic method, the chemical indicative signal, such as Vₒᵤₜ, is here at a working point level when there is no presence of the chemical at the sensor, and the chemical indicative signal diverge from the working point when there is a presence of the chemical at the sensor. For the exemplifying device, Vₒᵤₜ drops below the working point level when hydrogen is present at the gate.

In a step 570, a chemical, i.e. hydrogen for the exemplifying device, indicative output signal, such as Vₒᵤₜ, is provided during at least an interval of the measuring period.

A counteracting voltage for counteracting the drift of the working point is provided to the electrodes during a counteracting period T_{C} in a step 580. When there is a work function difference voltage that is of opposite polarity to the measuring voltage, such as in the exemplifying device case, the counteracting voltage may have the same polarity as the measuring voltage but should be less in size than the work function difference voltage. However, preferably the counteracting voltage is 0 V or is a voltage of opposite polarity to the measuring voltage. A 0 V counteracting voltage may be provided by setting the first electrode to the potential of the second electrode. In the exemplifying device case, this can be achieved by grounding the gate.

After the counteracting voltage has been provided in the step 580, the steps 560, 570 and 580 are repeated as long as the device is powered on and enabled for sensing.

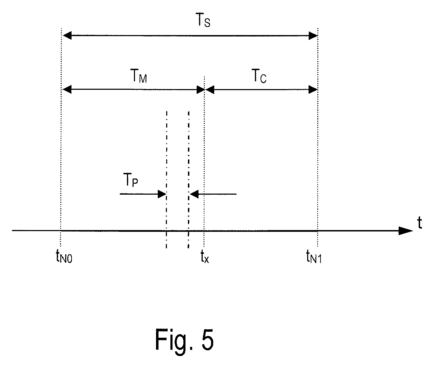

The measuring period together with the counteracting period, i.e. T_{M} + T_{C}, should be selected in length so that the steps 560-580 repeat at least a number of times during the shortest power-on period of the device where the device should be able to sense and respond to the chemical. Further details relating to the measuring period T_{M} and the counteracting period T_{C} will be discussed in connection with Fig. 5.

The counteracting voltage regularly counteracts the working point drift caused by the measuring voltage and the working point can be kept under control and large deviations thus be avoided. Powering the device off, for example for power saving reasons, such as in a step 550 of Fig. 4, followed by again powering the device on, may thus result in no drastic, or at least a reduced, shift of the working point.

It should be noted that step 570 may not need to be present in every iteration of steps 560 and 580 during a power-on period. For example, when the measuring period and the counteracting period are short, it may not always be required, or even desirable, to provide a chemical indicative signal as often as once every period T_{M} + Tc.

Fig. 5 schematically illustrates the measuring period T_{M} and the counteracting period T_{C} during one sub-period T_{S} of a power-on period Tₒₙ of a field effect sensing device operated according to the embodiment described in connection with Fig. 4. The sub-period T_{S} corresponds to T_{M} + T_{C}. When the chemical indicative output signal is provided during the measuring period T_{M}, the signal may be provided at the end of that period. At least the chemical indicative signal should be provided when the measuring voltage has been applied long enough for the signal to stabilize after a voltage change. In Fig. 5, the chemical indicative signal is provided during a sub-interval T_{P} of the measuring period. This sub-interval can thus be approximately as long as the measuring period T_{M,} but can also be only a small fraction of it. For example, if the chemical indicative signal is accomplished by sampling, the sub-interval T_{P} may correspond to the width of a sampling pulse, which e.g. may be one or a few microseconds.

Note that the sub-period T_{S} may correspond to the sampling period, but that the sampling period also can be longer than T_{S}. The sub-period T_{S} may be in the range 1 µs to 1 hour, however, preferably T_{S} is between 0.001 s and 1 s. However, which length that is possible, allowed and required, depends on the application, the exact sensor configuration, choice of material etc. A short T_{S} may be required in order to prevent that the measuring voltage is applied for so long that an undesirable large working point shift occurs. However, the measuring period T_{M} does not have to be much longer than what is required in order to be able to provide the chemical indicative signal. If a chemicals indicative signal do not need to be provided more than during a certain T_{P} period, T_{M} may be close to T_{P} in length and the rest of T_{S} can be the counteracting period. In any case, preferably the counteracting period T_{C} is more than 50% of T_{S}, at least when a counteracting voltage of 0 V is used.

It was previously mentioned that T_{S} should be selected so that the measuring voltage and the counteracting voltage are applied at least a number of times during the shortest power-on period of the device where the device should be able to sense and respond to the chemical. For example, if the device must be able to sense a chemical every 10th second, then 10 s is the shortest power on period where the device should be able to sense and respond to the chemical.

It may be noted that the method results in that chemical indicative signals will be provided timely spaced apart by at least one counteracting period T_{C}. It may thus be desirable to synchronize or even combine the provision of the chemical indicative signal with sampling of the signal. The timely spaced apart signals may also be made continuous, e.g. by using an appropriate low pass filter.

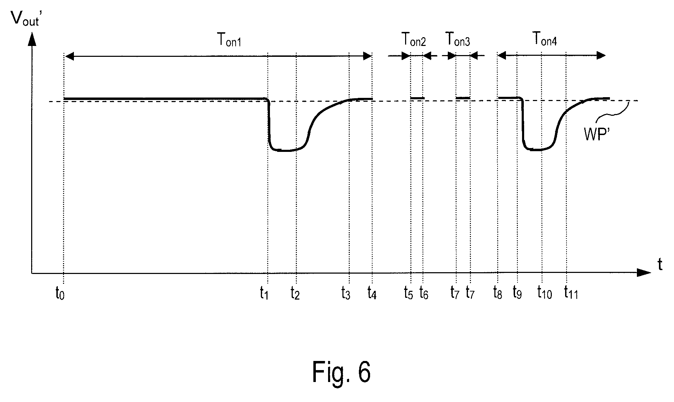

Fig. 6 is a schematic example of a chemical indicative output signal from a field effect gas sensing device when a method such as described above in connection with Fig. 5 is used. The curve in Fig. 6 is a result from the same power switching events and chemical stimuli that resulted in the curve of Fig. 3. Visualization of improvements may thus conveniently be made by comparing Fig. 6 and Fig. 3.

It can be seen that there is now only one working point level WP', i.e. the working point is stable and no longer dependent on when and how often the device is powered on/off.

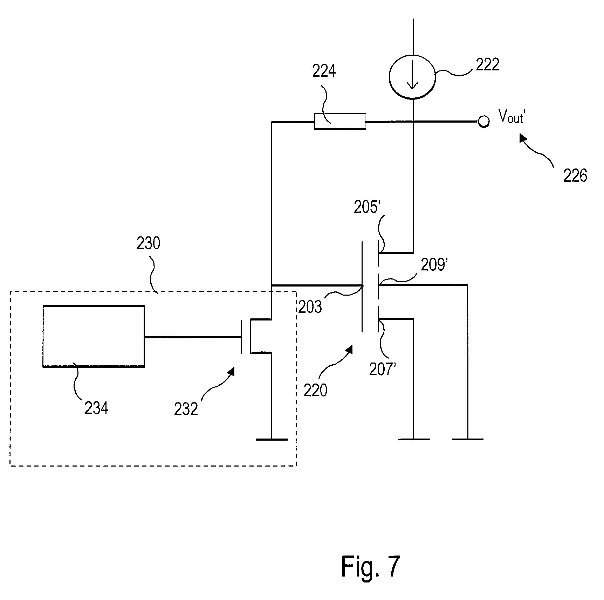

Fig. 7 shows circuitry of a field effect sensing device according to an embodiment. The device is an extended version of the circuitry shown in Fig. 2, which has been adapted to carry out the method that was described above in connection with Fig. 5. The gate is here connected to a current source 222 via a resistor 224 and to ground via a switch transistor 232. The switch transistor is controlled by a controller 234. During power on of the device, the controller applies a measuring voltage by keeping the transistor 232 switched off during the measuring period, i.e. the gate 203 is disconnected from ground and the measuring voltage is applied by the gate voltage set via resistor 224. When the measuring period has expired, the controller provides a counteracting voltage by switching the transistor 232 on so that the gate 203 is connected to ground. Since the body 209', typically the substrate, of the transistor is already connected to ground, the result is a counteracting voltage of 0 V.

In alternative embodiments, a controller may set voltages at other parts of the transistor, such as body or substrate, in order to apply the measuring voltage and/or the counteracting voltage, and/or alter between these voltages.

To ensure that any application comprising the device is reading a voltage at node 226 only when a chemical indicative signal Vₒᵤₜ is present, i.e. during the measuring period, there can be synchronization taking part between the controller 234 and for example a sampling means (not shown). The sampling means may be part of the sensing device or be external. For example, the controller may provide a synchronization signal that controls a sample and hold circuit, or a clock may provide a synchronization signal to both the controller and the sampling means. It is also possible to provide an input signal to the controller, e.g. from the sampling means, whereby the controller, based on this signal, determines and/or sets appropriate measuring and counteracting periods and/or synchronizes the measuring period with the sampling period.

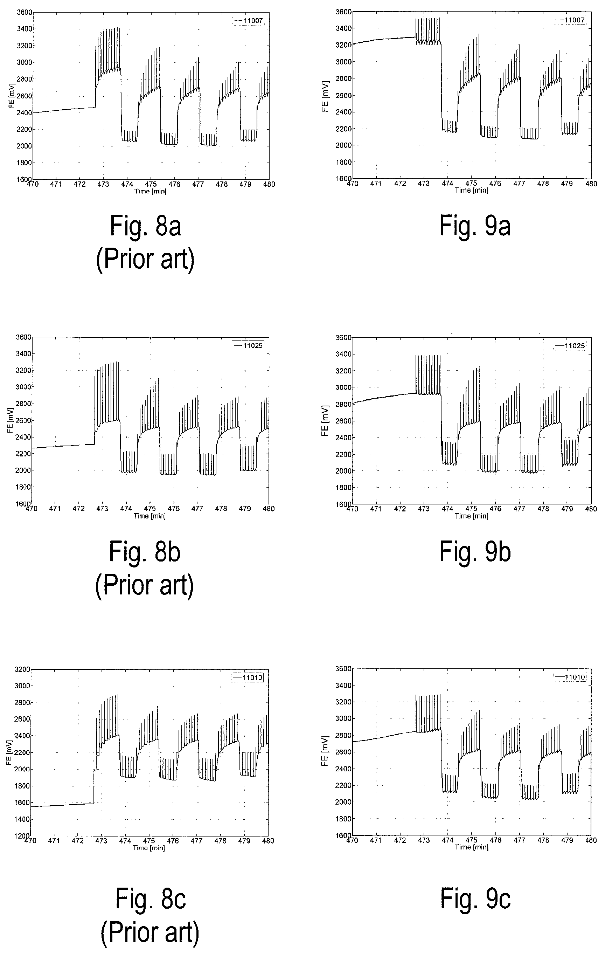

Figs. 8a-8c show results from test measurements on three individual copies of a field effect gas sensing device that are controlled according to the basic method. The copies are integrated circuits of the same type, have been produced in the same Si-based process etc., and are thus implementations of the same device. Circuitry of the device corresponds to the circuitry shown in Fig. 7, however, the controller is programmed to operate the devices according to the basic method, i.e. transistor 232 is always switched off (nonconducting). Each copy is sensitive to hydrogen, the gate electrode is made of a stack of metal layers with platinum closest to the insulator, the substrate is p-doped, the work function difference voltage φ between the gate and the substrate is 0.6 V, with platinum having the higher work function etc. Each copy may thus be seen as an implementation of the exemplifying device. The constant current through the transistor of each device is about 100 µA. The shown curves are based on sampled chemical indicative signals, Vₒᵤₜ. The spikes that can be seen in the figures represent expected offsets before a stable sensor temperature is reached after power on and may in this context be ignored. Note that the time is not continuous along the x-axis. During the period of repeated power on/off switching described below, the devices are turned off for 40 s and then turned on for 7 s and so on. No measurement data is however stored when the devices are turned off and therefore the devices appear to be switched off for very short periods in the figures, although the "off time" is actually much longer than the "on time". This means that even though the time axis in the figures indicates a measurement time of 10 min, the total measurement time is about 50 min.

In each curve there is first a straight line which corresponds to a device in a power-on state when there is no detection of hydrogen, i.e. Vₒᵤₜ is at its working point. The devices have been turned on for about 8 h before the time span in the figures start. A slightly increasing slope of the line can be explained by recovery of the sensor from a previous gas detection.

When the device copies are being switched off/on, a sudden upward shift can be seen in the curve although there is still no presence of hydrogen. The sudden shift is the previously mentioned startup offset, which can be seen as an indicator of that there are problems due to a moving working point. Typically larger startup offsets means greater reliability problems. It can be seen that the offsets are quite large for these devices and vary between the individual copies.

After the first power off/on switching, which results in the startup offset, the devices are repeatedly powered on/off for the remaining time shown in the figures. Due to this, Vₒᵤₜ will, when there is no hydrogen present, remain close to the high working point that was reached after the first power on/off. In the figures there can be seen four valleys which represents Vₒᵤₜ during periods when there is a sensor response to hydrogen.

Fig. 9a-9c show corresponding test measurements as in Fig. 8a-8c using the same individual field effect sensing device copies, but when the controller of the device of Fig. 7 is enabled to control the devices according to the embodiment described in connection with Fig. 5. The counteracting period T_{C} here is 60% of T_{S} (T_{M} + T_{C}). T_{S} is 10 ms. The sampling of Vₒᵤₜ has been synchronized with the provision of Vₒᵤₜ in the measuring periods so that there is a sample every 10 ms. The actual sampling is made during only a few microseconds at the end of the measuring period.

It can be seen that in Figs. 9a-9c there are virtually no start-up offsets, and all three devices present a similar curve. Hence, the devices now have no, or at least less, problems pertaining to a moving working point, and there is no longer any substantial individual device copy dependency in the chemical indicative signal.

## Claims

1. A method for controlling a field effect sensing device comprising an Insulated Gate Field Effect Transistor IGFET, said IGFET comprising an insulator (101) arranged between a first electrode (103) corresponding to the gate of said IGFET and a second electrode (109) corresponding to the substrate of said IGFET, wherein said first electrode (103) comprises a chemical sensitive material affecting an electrical signal when said chemical sensitive material is in contact with an ambient chemical, the IGFET further comprising a source (105, 105'), a drain (108, 108') and a conducting channel (111) between said source (105, 105') and drain (108, 108'), wherein said method comprises repetitive executions of the following steps during a power-on period (T_{ON}) of said device, thereby providing a sequence of timely spaced apart chemical indicative output signals (226) during said power-on period (T_{ON}):
- applying (560) a measuring voltage of a first polarity to said electrodes during a measuring period (T_{M});
- providing (570), during at least a sub-interval (T_{P}) of said measuring period (T_{M}), a chemical indicative electrical output signal (226), said signal (226) being provided when the chemical sensitive material is in contact with an ambient chemical, whereby the resistance of said conducting channel (111) is affected and the chemical indicative electrical output signal (226) generated;
- providing (580) a counteracting voltage to said electrodes during a counteracting period (T_{C}), said counteracting voltage being:
of opposite polarity to said measuring voltage, or
of the same polarity as said measuring voltage and less in size than a work function difference voltage between said electrodes, or 0 V,
so that a working point drift of said chemical indicative signal caused by said measuring voltage is counteracted.

2. The method as claimed in claim 1, wherein the work functions of the electrodes have a difference (ΔW) corresponding to a work function difference voltage (Φ).

3. The method as claimed in claim 2, wherein the work function difference voltage (φ) is of a second polarity that is opposite to the polarity of the measuring voltage.

4. The method as claimed in any one of claims 2-3, wherein said measuring voltage is larger in absolute value than said work function difference voltage.

5. The method as claimed in any one of claims 2-4, wherein the chemical sensitive material is a catalytic metal.

6. The method as claimed in any one of claims 1-5, wherein the step of providing (580) the counteracting voltage comprises:
- connecting the first electrode to the electric potential of the second electrode, preferably ground.

7. The method as claimed in any one of the preceding claims, wherein the counteracting period (T_{C}) is 0.8 times the measuring period (T_{M}) or more.

8. The method as claimed in any one of the preceding claims, wherein the measuring period (T_{M}) together with the counteracting period (T_{C}) is in the range 1 µs to 1 hour, preferably in the range 0.001 s to 1 s.

9. The method as claimed in any one of the preceding claims, further comprising the step of:
- sampling the chemical indicative output signal during the sub-interval(T_{P}).

10. The method as claimed in any one of the
preceding claims, wherein the chemical sensitive material is sensitive to a gas, such as hydrogen.

11. The method as claimed in any one of the preceding claims, wherein a constant current is provided between source and drain of the IGFET during the power-on period (T_{ON}).

12. A field effect sensing device for sensing a chemical comprising an Insulated Gate Field Effect Transistor IGFET, said IGFET comprising an insulator (101) arranged between a first electrode (103) corresponding to the gate of said IGFET and a second electrode (109) corresponding to the substrate of said IGFET, wherein said first electrode (103) comprises a chemical sensitive material affecting an electrical signal when said chemical sensitive material is in contact with an ambient chemical, a source (105, 105'), a drain (108, 108') and a conducting channel (111) between said source (105, 105') and drain (108, 108'), wherein said field effect sensing device further comprises:
- means (222, 224) for applying (560) a measuring voltage of a first polarity to said electrodes during a measuring period (T_{M});
- means (220, 222) for providing (570), during at least a sub-interval (T_{P}) of said measuring period (T_{M}), a chemical indicative electrical output signal (226), said signal (226) being provided when the chemical sensitive material is in contact with an ambient chemical, whereby the resistance of said conducting channel (111) is affected and the chemical indicative electrical output signal (226) generated;
- means (230) for providing (580) a counteracting voltage to said electrodes during a counteracting period (T_{C}), said counteracting voltage being:
of opposite polarity to said measuring voltage, or
of the same polarity as said measuring voltage and less in size than a work function difference voltage between said electrodes, or 0 V,
so that a working point drift of said chemical indicative signal caused by said measuring voltage is counteracted; and
- a controller (234) for repeatedly altering between said measuring voltage and said counteracting voltage during a power-on period (T_{ON}) of said device, thereby providing a sequence of timely spaced apart chemical indicative output signals (226) during said power-on period (T_{ON}).

## Patentansprüche

1. Verfahren zum Steuern einer Feldeffektmessvorrichtung mit einem Insulated-Gate-Field-Effect-Transistor IGFET, wobei der IGFET einen zwischen einer ersten Elektrode (101), die dem Gate des IGFET entspricht, und einer zweiten Elektrode (109), die dem Substrat des IGFET entspricht, angeordneten Isolator (101) aufweist, wobei die erste Elektrode (103) ein chemisch empfindliches Material aufweist, welches ein elektrisches Signal beeinflusst, wenn das chemische Material in Kontakt mit einer umgebenden Chemikalie ist, wobei der IGFET ferner eine Source (105, 105'), einen Drain (108, 108') und einen leitfähigen Kanal (111) zwischen der Source (105, 105') und dem Drain (108, 108') aufweist, wobei das Verfahren das wiederholte Ausführen der folgenden Schritte während eines Einschaltzeitraums (T_{ON}) der Vorrichtung aufweist, wodurch eine Abfolge von zeitlich beabstandeten chemisch indikativen Ausgangssignalen (226) während des Einschaltzeitraums (T_{ON}) geliefert wird,
- Anlegen (560) einer Messspannung mit einer ersten Polarität an die Elektroden während eines Messzeitraums (T_{M});
- Liefern (570) eines chemisch indikativen elektrischen Ausgangssignals (226) während mindestens eines Subintervalls (T_{P}) des Messzeitraums (T_{M}), wobei das Signal (226) geliefert wird, wenn das chemisch empfindliche Material in Kontakt mit einer umgebenden Chemikalie ist, wodurch der Widerstand des leitfähigen Kanals (111) beeinflusst wird und das chemisch indikative elektrische Ausgangssignal (226) erzeugt wird;
- Liefern (580) einer Gegenwirkungsspannung an die Elektroden während eines Gegenwirkungszeitraums (T_{C}), wobei die Gegenwirkungsspannung
eine Polarität aufweist, die derjenigen der Messspannung entgegengesetzt ist, oder
dieselbe Polarität wie die Messspannung aufweist und von geringerer Größe als eine Arbeitsfunktionsdifferenzspannung zwischen den Elektroden ist, oder
0V beträgt,
so dass einer Arbeitspunktdrift des chemisch indikativen Signals, welche durch die Messspannung verursacht wird, entgegengewirkt wird.

2. Verfahren nach Anspruch 1, bei welchem die Arbeitsfunktionen der Elektroden eine Differenz (ΔW) aufweisen, die einer Arbeitsfunktionsdifferenzspannung (Φ) entspricht.

3. Verfahren nach Anspruch 2, bei welchem die Arbeitsfunktionsdifferenzspannung (Φ) eine zweite Polarität aufweist, die der Polarität der Messspannung entgegengesetzt ist.

4. Verfahren nach einem der Ansprüche 2-3, bei welchem die Messspannung in absoluten Werten größer als die Arbeitsfunktionsdifferenzspannung ist.

5. Verfahren nach einem der Ansprüche 2-4, bei welchem das chemisch empfindliche Material ein katalytisch wirkendes Metall ist.

6. Verfahren nach einem der Ansprüche 1-5, bei welchem der Schritt des Lieferns (580) der Gegenwirkungsspannung aufweist:
- Verbinden der ersten Elektrode mit dem elektrischen Potential der zweiten Elektrode, vorzugsweise Masse.

7. Verfahren nach einem der vorhergehenden Ansprüche, bei welchem der Gegenwirkungszeitraum (TC) das 0,8-fache des Messzeitraums (T_{M}) oder mehr beträgt.

8. Verfahren nach einem der vorhergehenden Ansprüche, **dadurch gekennzeichnet, dass** der Messzeitraum (T_{M}) zusammen mit dem Gegenwirkungszeitraum (TC) im Bereich von 1 µs bis 1 Stunde liegt, vorzugsweise im Bereich von 0,001 s bis 1 s.

9. Verfahren nach einem der vorhergehenden Ansprüche, ferner mit dem Schritt:
- Abtasten des chemisch indikativen Ausgangssignals während des Subintervalls (T_{P}).

10. Verfahren nach einem der vorhergehenden Ansprüche, bei welchem das chemisch empfindliche Material ein Gas, beispielsweise Wasserstoff, ist.

11. Verfahren nach einem der vorhergehenden Ansprüche, bei welchem ein konstanter Strom zwischen der Source und dem Drain des IGFET während des Einschaltzeitraums (T_{ON}) geliefert wird.

12. Feldeffektmessvorrichtung mit einem Insulated-Gate-Field-Effect-Transistor IGFET, wobei der IGFET aufweist: einen zwischen einer ersten Elektrode (103), die dem Gate des IGFET entspricht, und einer zweiten Elektrode (109), die dem Substrat des IGFET entspricht, angeordneten Isolator (101), wobei die erste Elektrode (103) ein chemisch empfindliches Material aufweist, welches ein elektrisches Signal beeinflusst, wenn das chemische Material in Kontakt mit einer umgebenden Chemikalie ist, eine Source (105, 105'), einen Drain (108, 108') und einen leitfähigen Kanal (111) zwischen der Source (105, 105') und dem Drain (108, 108'), wobei die Feldeffektmessvorrichtung ferner aufweist:
- Einrichtungen (222, 224) zum Anlegen (560) einer Messspannung mit einer ersten Polarität an die Elektroden während eines Messzeitraums (T_{M});
- Einrichtungen (220, 222) zum Liefern (570) eines chemisch indikativen elektrischen Ausgangssignals (226) während mindestens eines Subintervalls (T_{P}) des Messzeitraums (T_{M}), wobei das Signal (226) geliefert wird, wenn das chemisch empfindliche Material in Kontakt mit einer umgebenden Chemikalie ist, wodurch der Widerstand des leitfähigen Kanals (111) beeinflusst wird und das chemisch indikative elektrische Ausgangssignal (226) erzeugt wird;
- Einrichtungen (230) zum Liefern (580) einer Gegenwirkungsspannung an die Elektroden während eines Gegenwirkungszeitraums (T_{C}), wobei die Gegenwirkungsspannung
eine Polarität aufweist, die derjenigen der Messspannung entgegengesetzt ist, oder
dieselbe Polarität wie die Messspannung aufweist und von geringerer Größe als eine Arbeitsfunktionsdifferenzspannung zwischen den Elektroden ist, oder
0V beträgt,
so dass einer Arbeitspunktdrift des chemisch indikativen Signals, welche durch die Messspannung verursacht wird, entgegengewirkt wird; und
- eine Steuerung (234) zum wiederholten Wechseln zwischen der Messspannung und der Gegenwirkungsspannung während eines Einschaltzeitraums (T_{ON}) der Vorrichtung, wodurch eine Abfolge von zeitlich beabstandeten chemisch indikativen Ausgangssignalen (226) während des Einschaltzeitraums (T_{ON}) geliefert wird.

## Revendications

1. Procédé pour commander un dispositif de détection à effet de champ, comprenant un transistor à effet de champ à grille isolée, IGFET, ledit transistor à effet de champ à grille isolée comprenant un isolateur (101) disposé entre une première électrode (103) correspondant à la grille dudit transistor à effet de champ à grille isolée et une deuxième électrode (109) correspondant au substrat dudit transistor à effet de champ à grille isolée, ladite première électrode (103) comprenant un matériau sensible aux produits chimiques affectant un signal électrique lorsque ledit matériau sensible aux produits chimiques est en contact avec un produit chimique ambiant, le transistor à effet de champ à grille isolée comprenant de plus une source (105, 105'), un drain (108, 108') et un canal conducteur (111) entre ladite source (105, 105') et ledit drain (108, 108'), ledit procédé comprenant des exécutions répétitives des étapes suivantes durant une période de mise en service (T_{ON}) dudit dispositif, de façon à produire ainsi une séquence de signaux de sortie indicatifs de produits chimiques (226) mutuellement espacés dans le temps durant ladite période de mise en service (T_{ON}) :
- l'application (560) d'une tension de mesure d'une première polarité auxdites électrodes durant une période de mesure (T_{M}) ;
- la délivrance (570), durant au moins un sous-intervalle (T_{P}) de ladite période de mesure (T_{M}), d'un signal de sortie électrique indicatif d'un produit chimique (226), ledit signal (226) étant délivré lorsque le matériau sensible aux produits chimiques est en contact avec un produit chimique ambiant, grâce à quoi la résistance dudit canal conducteur (111) est affectée et le signal de sortie électrique indicatif d'un produit chimique (226) est généré ;
- la délivrance (580) d'une tension d'opposition auxdites électrodes durant une période d'opposition (T_{C}), ladite tension d'opposition étant :
de polarité opposée à celle de ladite tension de mesure, ou
de polarité identique à celle de ladite tension de mesure et de valeur inférieure à celle d'une tension de différence de travail de sortie (« work function ») entre lesdites électrodes, ou
de 0 V,
de telle sorte qu'une dérive de point de travail dudit signal indicatif d'un produit chimique provoqué par ladite tension de mesure soit contrecarrée.

2. Procédé selon la revendication 1, dans lequel les travaux de sortie des électrodes ont une différence (ΔW) correspondant à une tension de différence de travail de sortie (Φ).

3. Procédé selon la revendication, 2, dans lequel la tension de différence de travail de sortie (Φ) est d'une deuxième polarité qui est opposée à la polarité de la tension de mesure.

4. Procédé selon l'une quelconque des revendications 2 à 3, dans lequel ladite tension de mesure est supérieure, en valeur absolue, à ladite tension de différence de travail de sortie.

5. Procédé selon l'une quelconque des revendications 2 à 4, dans lequel le matériau sensible aux produits chimiques est un métal catalytique.

6. Procédé selon l'une quelconque des revendications 1 à 5, dans lequel l'étape de délivrance (580) de la tension d'opposition comprend :
- la connexion de la première électrode au potentiel électrique de la deuxième électrode, et de préférence à la masse.

7. Procédé selon l'une quelconque des revendications précédentes, dans lequel la période d'opposition (T_{C}) est de 0,8 fois la période de mesure (T_{M}) ou plus.

8. Procédé selon l'une quelconque des revendications précédentes, dans lequel la période de mesure (T_{M}), avec la période d'opposition (T_{C}), est dans la plage comprise entre 1 µs et 1 heure, et de préférence dans la plage comprise entre 0,001 s et 1 s.

9. Procédé selon l'une quelconque des revendications précédentes, comprenant de plus l'étape consistant à :
- échantillonner le signal de sortie électrique indicatif d'un produit chimique durant le sous-intervalle (T_{P}).

10. Procédé selon l'une quelconque des revendications précédentes, dans lequel le matériau sensible aux produits chimiques est sensible à un gaz, tel que l'hydrogène.

11. Procédé selon l'une quelconque des revendications précédentes, dans lequel un courant constant est délivré entre la source et le drain du transistor à effet de champ à grille isolée durant la période de mise en service (T_{ON}).

12. Dispositif de détection à effet de champ pour détecter un produit chimique comprenant un transistor à effet de champ à grille isolée, IGFET, ledit transistor à effet de champ à grille isolée comprenant un isolateur (101) disposé entre une première électrode (103) correspondant à la grille dudit transistor à effet de champ à grille isolée et une deuxième électrode (109) correspondant au substrat dudit transistor à effet de champ à grille isolée, ladite première électrode (103) comprenant un matériau sensible aux produits chimiques affectant un signal électrique lorsque ledit matériau sensible aux produits chimiques est en contact avec un produit chimique ambiant, une source (105, 105'), un drain (108, 108') et un canal conducteur (111) entre ladite source (105, 105') et ledit drain (108, 108'), ledit dispositif de détection à effet de champ comprenant de plus :
- des moyens (222, 224) pour appliquer (560) une tension de mesure d'une première polarité auxdites électrodes durant une période de mesure (T_{M}) ;
- des moyens (220, 222) pour délivrer (570), durant au moins un sous-intervalle (T_{P}) de ladite période de mesure (T_{M}), un signal de sortie électrique indicatif d'un produit chimique (226), ledit signal (226) étant délivré lorsque le matériau sensible aux produits chimiques est en contact avec un produit chimique ambiant, grâce à quoi la résistance dudit canal conducteur (111) est affectée et le signal de sortie électrique indicatif d'un produit chimique (226) est généré ;
- des moyens (230) pour délivrer (580) une tension d'opposition auxdites électrodes durant une période d'opposition (T_{C}), ladite tension d'opposition étant :
de polarité opposée à celle de ladite tension de mesure, ou
de polarité identique à celle de ladite tension de mesure et de valeur inférieure à celle d'une tension de différence de travail de sortie entre lesdites électrodes, ou
de 0 V,
de telle sorte qu'une dérive de point de travail dudit signal indicatif d'un produit chimique provoqué par ladite tension de mesure soit contrecarrée ; et
- un dispositif de commande (234) pour produire un changement de façon répétée entre ladite tension de mesure et ladite tension d'opposition durant une période de mise en service (T_{ON}) dudit dispositif, de façon à délivrer ainsi une séquence de signaux de sortie indicatifs de produits chimiques (226) mutuellement espacés dans le temps durant ladite période de mise en service (T_{ON}).
